## Europäisches Patentamt
## European Patent Office
## Office européen des brevets

(11) Veröffentlichungsnummer: **0 025 595**
**B1**

(12) # EUROPÄISCHE PATENTSCHRIFT

(45) Veröffentlichungstag der Patentschrift:
**06.02.85**

(51) Int. Cl.⁴: **F 16 K 11/06**

(21) Anmeldenummer: **80105438.8**

(22) Anmeldetag: **11.09.80**

(54) **Mischventil.**

(30) Priorität: **14.09.79 US 75619**

(43) Veröffentlichungstag der Anmeldung:
**25.03.81 Patentblatt 81/12**

(45) Bekanntmachung des Hinweises auf die Patenterteilung:
**06.02.85 Patentblatt 85/6**

(84) Benannte Vertragsstaaten:
**AT BE DE FR GB IT NL**

(56) Entgegenhaltungen:
**DE - A - 1 967 118**
**DE - A - 2 322 007**
**DE - A - 2 544 732**
**DE - A - 2 606 952**
**DE - A - 2 803 663**
**DE - A - 2 856 255**
**FR - A - 2 154 961**
**US - A - 2 090 843**
**US - A - 3 916 951**
**US - A - 3 921 659**
**US - A - 3 965 936**

(73) Patentinhaber: **American Standard Inc., 40 West 40th Street, New York, N.Y. 10018 (US)**

(72) Erfinder: **Parkison, Richard G., 1908 Herr Lane, Louisville Kentucky 40222 (US)**

(74) Vertreter: **Gesthuysen, Hans Dieter, Dipl.-Ing., Patentanwälte Gesthuysen + von Rohr Huyssenallee 15 Postfach 10 13 33, D-4300 Essen 1 (DE)**

ACTORUM AG

## Beschreibung

Die Erfindung betrifft ein Mischventil mit einer Sitzplatte, in der eine Öffnung für ein heisses Strömungsmittel, eine Öffnung für ein kaltes Strömungsmittel und eine Auslassöffnung ausgespart sind, einer bezüglich der Sitzplatte drehbaren Steuerplatte, die mit einer Oberfläche an der Sitzplatte anliegt, welche Steuerplatte eine an die anliegende Oberfläche angrenzende Aushöhlung aufweist, mit zwei bezüglich einer Symmetrieachse symmetrisch angeordneten Ausbuchtungen.

Es besteht ein Bedarf nach einem massiven, relativ preiswerten Mischventil zum gegenseitigen Mischen von Heiss- und Kaltwasser, um einen Wasserstrom bestimmter Temperatur abzugeben, welche zwischen den beiden Extremtemperaturen liegt. Vorzugsweise wird ein solches Ventil in Verbindung mit einer Dusche oder in Verbindung mit einer Batterie für Dusche und Badewanne vorgesehen, wobei das Ventil lediglich einen Betätigungsgriff aufweisen soll, um Wasser der gewünschten Mischungstemperatur abzugeben. Derartige Ventile werden häufig in Gebäuden mit zahlreichen Stockwerken verwendet, etwa in mehrstöckigen Apartment-Häusern, Motels und dgl. Zumeist sind die Duscheinrichtungen in solchen Gebäuden empfindlich bezüglich Druckschwankungen in den Kalt- bzw. Heisswasserleitungen; derartige Druckschwankungen treten insbesondere in den Morgenstunden und während der Spitzenbelastungen auf. Im Hinblick darauf besteht nicht nur ein Bedarf nach einer zuverlässigen und preiswerten Vorrichtung, welche ein Kaltwasser/Heisswasser-Gemisch bestimmter Temperatur abgibt, sondern die Vorrichtung soll darüber hinaus vor grösseren Schwankungen der Gemischtemperatur schützen, die auf einer Abnahme des Druckes entweder in der Heiss- oder Kaltwasser-Zuführleitung beruhen.

Darüber hinaus bestehen verschiedene andere Anforderungen, denen derartige Ventile genügen müssen. Typischerweise soll das Ventil eine lange Lebensdauer besitzen, lecksicher und korrosionsfest sein und eine exakt lineare Beziehung oder direkt proportionale Beziehung zwischen der Ventilhandgriff-Stellung und der Temperatur des abgegebenen Wassers besitzen. Alle diese Anforderungen müssen von einer Vorrichtung erfüllt werden, die zu einem wettbewerbsfähigen Preis verkauft und in einfacher fehlerfreier Weise eingebaut werden kann.

Vorzugsweise wird ein wirklich brauchbares Mischventil die Temperatur von Duschwasser innerhalb eines Bereiches von 2 bis 3 °C genau halten und in dem Moment, wo die Kaltwasserzufuhr ausfällt, den Heisswasserstrahl schnell auf einige Tropfen verringern. Zwischen den Heiss- und Kaltwasserzuführungen innerhalb der Vorrichtung darf keinerlei Undichtigkeit bestehen; darüber hinaus sollen keine zusätzlichen Absperr- und Abstellventile erforderlich sein. Die Empfindlichkeit der Einstellung ist ein weiterer wichtiger Gesichtspunkt dieser Erfindung. Wie bereits oben ausgeführt, soll das Mischventil eine lineare Beziehung zwischen der Handgriffdrehung und der Mischwassertemperatur innerhalb des für Duschzwecke üblichen Temperaturbereiches besitzen.

In den mit zahlreichen Stockwerken ausgestatteten Gebäuden ist es übliche Praxis, die Installationseinrichtungen benachbarter Apartments oder Wohnungen Rücken an Rücken an den gegenüberliegenden Seiten einer dazwischenliegenden Wand anzubringen. Weiterhin sind diese Installationen häufig an gemeinsame Heisswasser- und Kaltwasser-Zuführleitungen angeschlossen. Dies erlaubt eine Standardisierung der Installationen. Im Hinblick auf Sicherheitsüberlegungen ist es vorzugsweise vorgesehen, dass beim Öffnen des Mischventils, wozu der Handgriff entgegengesetzt dem Uhrzeigersinn gedreht wird, zuerst das Kaltwasser fliesst. Sind zwei solche Ventile entsprechend der üblichen Installation jeweils mit ihrem Rücken zueinander gerichtet installiert, so weisen die Heisswasser- bzw. Kaltwassereinlässe dieser beiden Mischventile die entgegengesetzte Anordnung auf, woraus sich ersichtlich Schwierigkeiten hinsichtlich der Forderung ergeben, dass beim Öffnen der beiden Ventile zuerst das Kaltwasser fliessen soll. Üblicherweise sind aufwendige und zeitraubende Installationsmassnahmen erforderlich, um die Ventile so anzuschliessen, dass in jedem Falle bei einer Drehung des Ventilhandgriffs entgegengesetzt dem Uhrzeigersinn zuerst das Kaltwasser fliesst. Darüber hinaus soll in dieser Hinsicht auch ein relativ einfaches Mittel innerhalb des Ventilaufbaus vorgesehen sein, um den Wasserzufluss in den Mischungsabschnitt zu unterbrechen, um ggf. Reparaturen an diesem Mischungsabschnitt durchzuführen.

Bei dem bekannten Mischenventil, von dem die Erfindung ausgeht (vgl. die FR-A-2 154 961) ist die Aushöhlung in der Steuerplatte herzförmig ausgeführt. Das hat zur Folge, dass keine Stellung der Steuerplatte denkbar ist, in welcher der Oberflächenabschnitt ausserhalb der Aushöhlung beide Wasser-Zufluss-Öffnungen abdeckt. Folglich ist nicht sichergestellt, dass bei der üblichen Drehrichtung zum Ingangsetzen des Wasserstromes stets zuerst Kaltwasser fliesst, – unabhängig vom Anschluss des Mischventils an die Heisswasserbzw. Kaltwasser-Zufuhr.

Der Erfindung liegt folglich die Aufgabe zugrunde, das bekannte Mischventil, von dem die Erfindung ausgeht, so auszugestalten, dass bei der üblichen Drehrichtung zum Ingangsetzen des Wasserstromes stets zuerst Kaltwasser fliesst, unabhängig vom Anschluss des Mischventils an die Heisswasser- bzw. Kaltwasser-Zufuhr.

Das erfindungsgemässe Mischventil, bei dem die zuvor aufgezeigte Aufgabe gelöst ist, ist gekennzeichnet durch die im Kennzeichnungsteil des Anspruchs 1 angegebenen Merkmale. Vorteilhafte Ausgestaltungen und Weiterbildungen ergeben sich aus den Unteransprüchen, den Ansprüchen 2 bis 9.

Für das erfindungsgemässe Mischventil gilt folgendes:

Es existiert stets eine Stellung der Steuerplatte, in welcher die nichtausgesparte Oberfläche der Steuerplatte, d.h. ausserhalb der Aushöhlung, sowohl die Heisswasser-Einlass-Öffnung als auch die Kaltwasser-Einlass-Öffnung in der Sitzplatte überdeckt, so dass ein Heisswasser- und/oder Kaltwasser-Eintritt in die Aushöhlung unterbunden ist.

Bei stets gleichsinniger Drehrichtung zum Ingangsetzen des Wasserstrahles kann durch einfache Vertauschung der Anordnung der Steuerplatte stets gewährleistet werden, dass zuerst die Kaltwasser-Zufuhr beginnt, unabhängig davon, ob die Kaltwasser-Einlass-Öffnung tatsächlich an die Kaltwasser-Zuführung der Versorgungsleitungen angeschlossen ist oder nicht.

Innerhalb der Mischventilkapsel stösst ein feststehender Ventilsitz aus keramischem Material an einer rotierenden Scheibe an, um die relativen Anteile an Heiss- und Kaltwasser, die miteinander vermischt werden sollen, sehr genau zu regulieren. Diese Empfindlichkeit der Mischungssteuerung wird durch eine besondere Kombination von Einlass- und Auslass-Durchgängen gewährleistet, die wiederum gebildet werden durch ausgewählte Veränderung der Anordnung zwischen den Öffnungen und einer Vertiefung innerhalb des stationären Ventilsitzes sowie einer angemessenen Aushöhlung in der rotierenden Scheibe, damit ein Bereich von Temperaturen des abgegebenen Wassergemisches gewährleistet wird, welcher den vollen Bereich von Kalt bis Heiss überspannt.

Die anfängliche winkelmässige Verschiebung der drehbaren Platte bewirkt zuerst eine Kaltwasser-Strömungsverbindung zwischen einer der Einlassöffnungen in dem stationären Ventilsitz und einem Auslassdurchgang zu dem Duschkopf oder dem Ausfluss der Badewannenbatterie durch die zumessende Aushöhlung in der rotierenden Scheibe. Wenn der Rotationswinkel zunimmt, dann wird das Heisswasser in der anderen Einlassöffnung des stationären Ventilsitzes dem bereits fliessenden Kaltwasser aus dem ersten Durchgang zugeführt, so dass das Heisswasser in jedem gewünschten Verhältnis mit dem Kaltwasser vermischt wird, um einen Wasserstrahl gewünschter Temperatur abzugeben.

Um die umgekehrte Orientierung der Heisswasser- und Kaltwasser-Einlassöffnungen in dem stationären Ventilsitz bezüglich der Heisswasser- und Kaltwasser-Zuleitungen zu gewährleisten, wenn diese Mischventile gegenseitig Rücken an Rücken installiert werden, ist es lediglich erforderlich, dass die Anordnung der drehbaren Scheibe bezüglich des stationären Ventilsitzes um 180° verdreht wird, um wiederum zu gewährleisten, dass das Kaltwasser zuerst durch das Mischventil fliesst. Weiterhin ist in dieser Hinsicht zu beachten, dass die Kombination der Einlassöffnungen, der Vertiefungen, Aushöhlungen und Durchgänge so ausgebildet ist, dass die Beziehung zwischen der winkelmässigen Verdrehung der drehbaren Ventilplatte bezüglich der anstossenden Platte und dadurch hervorgerufen die Änderung der Mischwassertemperatur im Temperaturbereich von etwa 30 bis 40 °C im wesentlichen linear ist.

Innere Leckagen sind ebenfalls sicher ausgeschlossen, indem nicht nur zwei Kapselabdichtungen an den Einlassdurchgängen, sondern ebenfalls zwei Kapselabdichtungen an den Auslassdurchgängen vorgesehen sind. Diese vier Abdichtungen erzeugen gemeinsam eine resultierende Kraft, die dazu beiträgt, die Ventilplatten in abgedichtetem Kontakt aneinanderzuhalten.

Ferner ist in der Heisswasser- sowie in der Kaltwasserleitung je ein Absperrventil installiert, damit der Durchfluss durch diese Leitungen unterbrochen werden kann, sofern die Mischventilkapsel bei Bedarf repariert oder ausgetauscht werden muss.

Nachfolgend werden diese und weitere Besonderheiten und Vorteile der Erfindung im einzelnen an Hand besonderer Ausführungsformen der Erfindung unter Bezugnahme auf die Figuren erläutert; es zeigt:

Fig. 1 in einer auseinandergezogenen, perspektivischen Darstellung eine typische Ausführungsform der Erfindung;

Fig. 2 in schematischer Darstellung das Mischventil nach Fig. 1;

Fig. 3 in schematischer Darstellung das Druckausgleichsventil in Fig. 2 in einem anderen Betriebszustand;

Fig. 4 in schematischer Darstellung das Druckausgleichsventil in Fig. 2 in einem weiteren Betriebszustand;

Fig. 5 die Hinteransicht einer Ventilplatte für die Anwendung bei der Ausführungsform nach Fig. 1;

Fig. 6 die Vorderansicht der Ventilplatte nach Fig. 5;

Fig. 7 die Hinteransicht einer drehbaren Ventilplatte;

Fig. 8 in einer auseinandergezogenen Darstellung die beiden Ventilplatten nach den Figuren 6 und 7;

Fig. 9 in einer Seitenansicht die gesamte Ventilkapsel für das erfindungsgemässe Mischventil; und

Fig. 10 in Form einer graphischen Darstellung wiedergegebene Versuchsergebnisse.

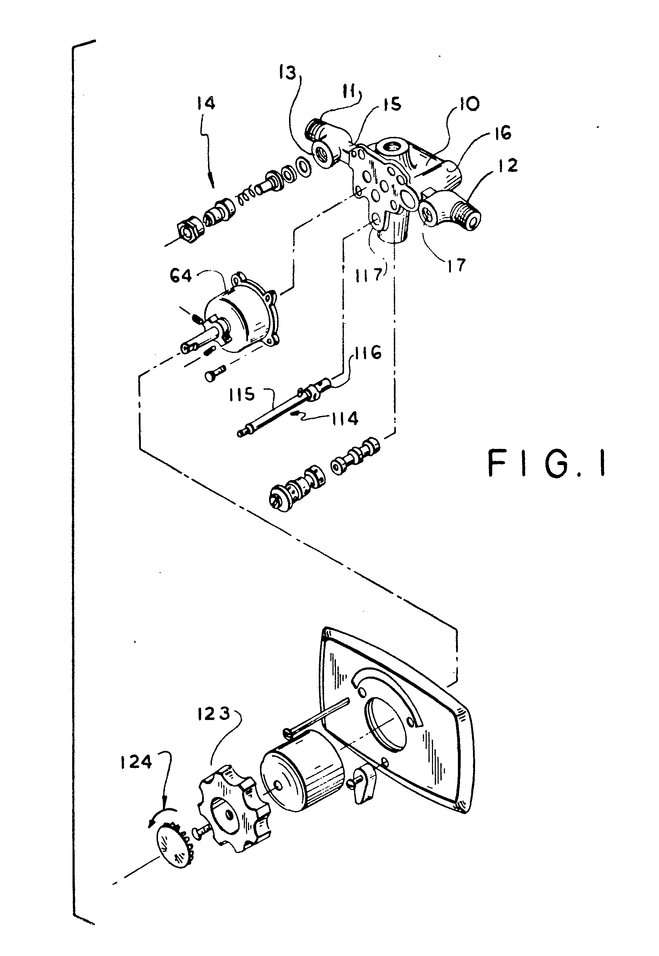

Zum besseren Verständnis der Erfindung wird auf Fig. 1 verwiesen, die einen Rohrverteiler 10 aus Messing oder anderem korrosionsbeständigem Material zeigt. Der Rohrverteiler 10 weist ein mit Gewinde versehenes Heisswassereinlass-Anschlussstücke 11 und ein mit Gewinde versehenes Kaltwassereinlass-Anschlussstück 12 auf. Das Heisswassereinlass-Anschlussstück 11 steht in Strömungsverbindung mit einem Ventilgehäuse 13 für ein Heisswasser-Absperrventil 14, das nachstehend im einzelnen beschrieben wird. Der Durchgang für das Heisswasser in der Leitung 15 folgt zwei rechten Winkeln zum Einlass eines (in Fig. 1 nicht dargestellten) Gehäuses 16 für das Druckausgleichsventil.

Analog steht das Kaltwassereinlass-Anschlussstück 12 in einer Strömungsverbindung mit dem anderen Einlass eines (in Fig. 1 nicht dargestellten) Gehäuses 16 für das Druckausgleichsventil wiederum über das Kaltwasserabsperrventil 17.

**0 025 595**

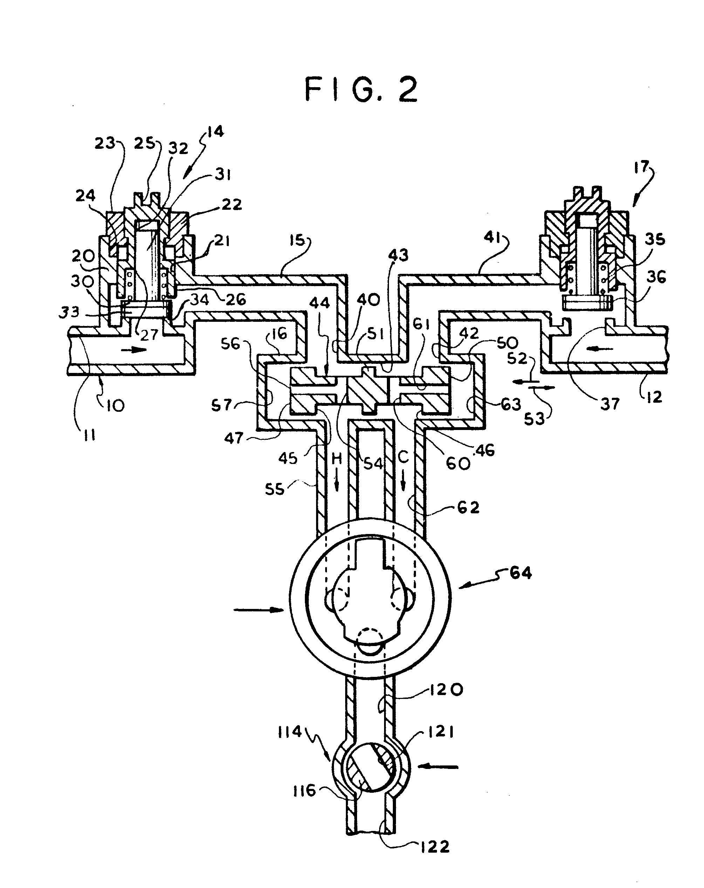

Das Heisswasser- und das Kaltwasser-Absperrventil 14 bzw. 17 und deren Zuordnung zum Rohrverteiler 10 lassen sich im einzelnen der Fig. 2 entnehmen. Jedes der beiden Ventile 14 und 17 weist im wesentlichen den gleichen Aufbau auf; die Erläuterung beschränkt sich daher auf das Heisswasser-Absperrventil 14. Zu diesem Heisswasser-Absperrventil 14 gehört ein Ventilgehäuse 20 mit einer Bohrung 21, in die ein Federhalter 22 passt. Der Federhalter 22 ist über ein Gewinde in eine Ventilhaube 23 eingeschraubt oder andersartig mit dieser Ventilhaube 23 befestigt, welche ihrerseits in einer erweiterten Vertiefung 24 innerhalb der Bohrung 21 angeordnet ist. Im Aussenende des Federhalters 22 ist ein Schlitz 25 ausgespart, damit ein Schraubenzieher oder ein anderes (in Fig. 2 nicht dargestelltes) Einstellwerkzeug den Federhalter 22 in die Bohrung 21 hineinschrauben oder aus dieser Bohrung herausschrauben kann, wie das bezüglich des Rohrverteilers 10 und der Ventilhaube 23 zweckmässig ist.

Innerhalb des Ventilgehäuses 20 befindet sich ein Flansch 26 am Federhalter 22 in gleitender Anlage mit der entsprechenden Fläche der Bohrung 21. Eine innerhalb des Federhalters 22 ausgebildete ringförmige Schulter 27 liefert eine Abstützfläche für eine Schraubenfeder 30. Die Längsachse der Schraubenfeder 30 fluchtet mit der Längsachse der im wesentlichen zylindrischen Federführung und des Ventilstössels 31. Wie in der Zeichnung dargestellt, liegt der Ventilstössel 31 gleitend an der mittigen Bohrung 32 an, die innerhalb des Federhalters 32 ausgebildet ist, damit der scheibenförmige Ventilkörper 33 am ringförmigen Ventilsitz 34 anliegen kann bzw. von diesem gelöst wird; der ringförmige Ventilsitz 34 ist seinerseits im Heisswassereinlass-Anschlussstück 11 des Rohrverteilers 10 ausgebildet.

Wie bereits oben ausgeführt, wird der Kaltwasserstrom durch das Einlass-Anschlussstück 12 vom Absperrventil 17 wahlweise unterbrochen, das sich als Reaktion auf die Kaltwasserströmung bzw. auf das Fehlen dieser Kaltwasserströmung öffnet oder schliesst, indem die Schraubenfeder 35 betätigt und der Ventilkörper 36 gegen den Ventilsitz 37 gedrückt wird.

Wie bereits ausgeführt, besteht ein Ziel der Erfindung darin, das sprunghafte Ansteigen der Heisswasser- oder Kaltwasserzufuhr zu unterbinden, indem ein Druckausgleichsventil vorgesehen ist. Zu diesem Zweck strömt das Heisswasser in der Leitung 15 über den Heisswassereinlass 40 in das Druckausgleichsventil-Gehäuse 16. In gleicher Weise strömt das Kaltwasser in der Leitung 41 durch den Kaltwassereinlass 42 in das Druckausgleichsventil-Gehäuse 16. Innerhalb des Druckausgleichsventil-Gehäuses 16 ist eine im wesentlichen zylindrische Kammer 43 ausgebildet, innerhalb der sich der Druckausgleichs-Steuerkolben 44 befindet. Die Länge des Steuerkolbens 44 ist geringer, als die Länge der entsprechenden Kammer 43. Der Steuerkolben 44 weist an einem Ende die ringförmige Nut 45 anschliessend an die hervorstehende Fläche 47, und am anderen Ende die ringförmige Nut 46 anschliessend an die hervorstehende Fläche 50 auf. Die in der Mitte des Steuerkolbens 44 hervorstehende ringförmige Fläche 51 unterteilt die beiden Nuten 45 und 46. Lediglich aus Gründen einer übersichtlicheren Darstellung von Steuerkolben 44 und Kammer 43 in Fig. 2 ist ein Zwischenraum zwischen dem Aussendurchmesser der hervorstehenden Flächen 47, 50 und 51 und dem Innendurchmesser der Kammer 43 dargestellt; tatsächlich passen jedoch diese hervorstehenden Flächen 47, 50 und 51 eng an die Innenfläche der Kammer 43, wobei ein ausreichender Spalt vorgesehen ist, damit der Steuerkolben 44 seitlich in Richtung der Pfeile 52 bzw. 53 verschiebbar ist. Weiterhin ist die Nut 45 bezüglich des Heisswassereinlasses 40 des Gehäuses 16 in Richtung auf die mittig hervorstehende Fläche 51 geringfügig versetzt, sofern der Steuerkolben 44 mittig innerhalb der Kammer 43 angeordnet ist. In gleicher Weise ist die Nut 46 bezüglich des Kaltwassereinlasses 42 in Richtung auf die hervorstehende Fläche 51 versetzt angeordnet, wenn sich der Steuerkolben 44 mittig innerhalb des Gehäuses 16 befindet. In dieser Hinsicht ist hervorzuheben, dass die Nuten 45, 46 deutlich breiter sind als die entsprechenden Heisswasser- bzw. Kaltwassereinlässe 40 bzw. 42.

Eine Bohrung 54 im Steuerkolben 44 öffnet sich in eine längsverlaufende Bohrung 56, so dass eine Wasserströmung zwischen der Bohrung 54 und einer Aushöhlung 57 möglich ist, die zwischen der hervorstehenden Fläche 47 und dem benachbarten Querende des Gehäuses 16 gebildet ist.

In gleicher Weise öffnet sich die diametral gegenüber verlaufende Bohrung 60 in die Bohrung 61, um eine Strömungsverbindung zwischen dem Kaltwasserauslass 62 und einer Aushöhlung 63 zu gewährleisten, die zwischen der hervorstehenden Fläche 50 und dem Querende des Gehäuses 16 gebildet ist.

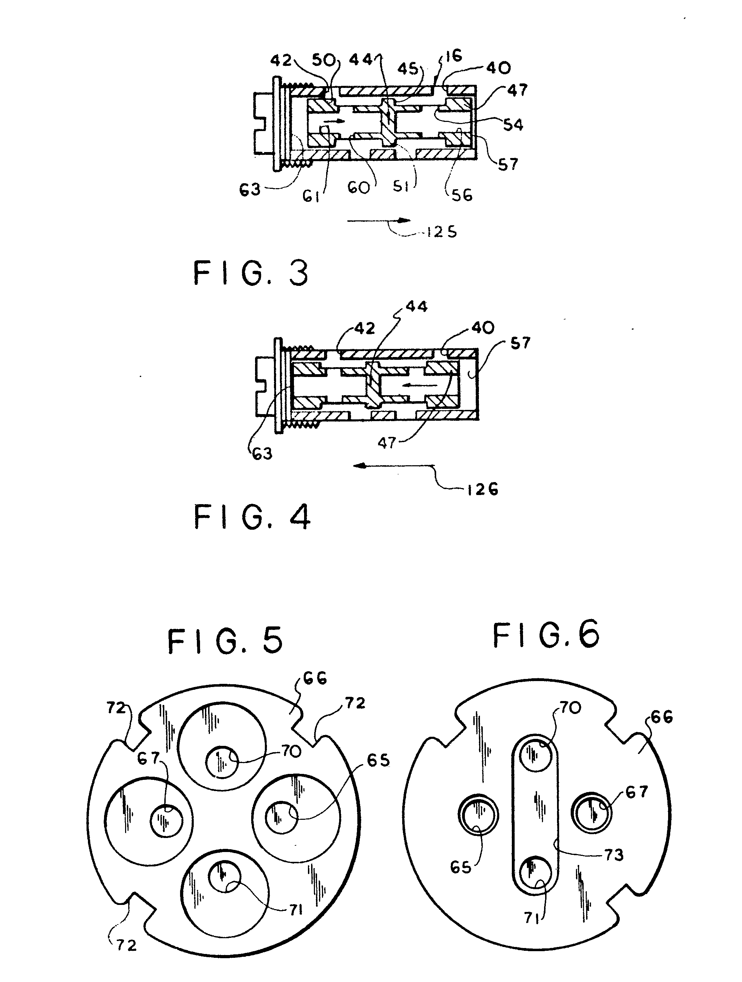

Wie aus Fig. 2 ersichtlich ist, strömt das Heisswasser in der Auslassleitung 55 sowie das Kaltwasser in der Auslassleitung 62 in die Mischventilkapsel 64. Innerhalb der Kapsel 64 strömt das Heisswasser, wie das am besten der Fig. 5 entnommen werden kann, durch eine einzelne Öffnung 65, die in einer Vertiefung in dem scheibenartigen Ventilsitz bzw. der stationären Sitzplatte 66 aus keramischem Material ausgebildet ist. Wie dargestellt fluchtet der Mittelpunkt dieser Vertiefung nicht mit dem Mittelpunkt der Öffnung 65, vielmehr ist die Öffnung 65 bezüglich der Vertiefung in Richtung auf den Sitzplattenmittelpunkt hin versetzt angeordnet. In gleicher Weise strömt das Kaltwasser durch eine Öffnung 67 und die anschliessende Vertiefung in der Sitzplatte 66.

Ferner sind die zu der Dusche bzw. zu dem Wasserhahn führenden Auslassöffnungen 70, 71 vorhanden, die ebenfalls in Vertiefungen innerhalb der Sitzplatte 66 übergehen; wie dargestellt sind auch diese Öffnungen 70, 71 bezüglich des Vertiefungsmittelpunkts in Richtung auf den Sitzplattenmittelpunkt hin versetzt angeordnet.

Damit die richtige Anordnung der Sitzplatte 66 innerhalb der Mischventilkammer 64 (Fig. 2) gewährleistet ist, sind im Umfang der Sitzplatte 66 drei Ausrichtungsnuten 72 (vgl. Fig. 5) ausgespart, welche bezüglich des Sitzplattenumrisses asymmetrisch angeordnet sind, damit die richtige Anordnung der Sitzplatte 66 innerhalb der Kapsel 64 gewährleistet ist.

Die Fig. 6 zeigt die andere Seite der Sitzplatte 66, nämlich diejenige Seite, die sich gegenüber den Vertiefungen befindet; auf dieser Seite der Sitzplatte 66 öffnen sich die Heisswasseröffnung 65 und die Kaltwasseröffnung 67 im wesentlichen glatt zur Scheibenoberfläche, wobei eine kleine Abkantung ausgebildet ist. Demgegenüber enden die Öffnungen 70 und 71 für die Dusche und den Wasserhahn auf dieser Seite der Sitzplatte 66 an den jeweiligen Enden einer länglichen Aushöhlung 73. Diese Aushöhlung 73 besitzt innerhalb der Sitzplatte 66 eine Tiefe, die angenähert der halben Scheibendicke entspricht.

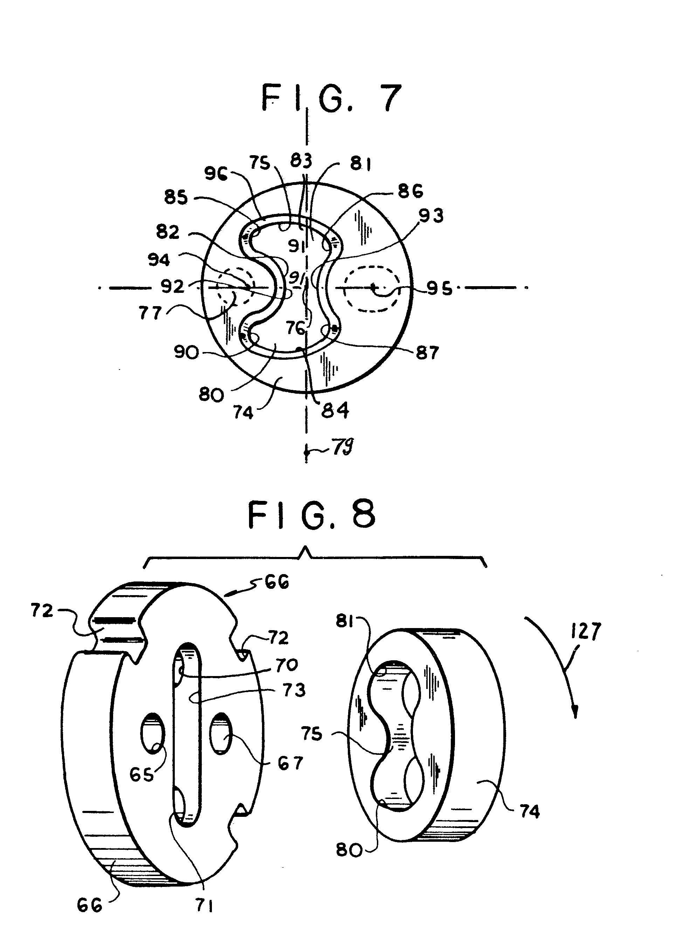

Die Fig. 7 zeigt eine drehbare, scheibenförmige Platte 74, die nachfolgend als Steuerplatte bezeichnet wird. Innerhalb der Oberfläche der Steuerplatte 74 ist eine sorgfältig abgemessene Aushöhlung 75 ausgespart, deren Tiefe ungefähr der halben Dicke der Steuerplatte 74 entspricht. Wie dargestellt ergibt sich der Grundriss der Aushöhlung 75 aus einer Folge von Konstruktionskreisen. Sofern beispielsweise die Steuerplatte einen Durchmesser von ungefähr 26,7 mm besitzt, dann ist gemäss der Zeichnung die Aushöhlung 75 um ungefähr 2,67 mm vom Plattenmittelpunkt 76 nach links versetzt. Ferner ist die Aushöhlung 75 asymmetrisch bezüglich des Scheibendurchmessers 77, indem zwei Ausbuchtungen 80, 81 auf gegenüberliegenden Seiten des Scheibendurchmessers 77 ausgebildet sind. Diese Ausbuchtungen sind asymmetrisch bezüglich eines zum Scheibendurchmesser 77 senkrechten Scheibendurchmessers. Dank dieser Anordnung haben die Ausbuchtungen 80 und 81 Abrundungen 85 und 90 (vgl. Fig. 7), die breiter sind und einen grösseren Volumenanteil der Aushöhlung 75 einnehmen, als die Abrundungen 86 und 87. Auf diese Weise sind diejenigen Abschnitte der Ausbuchtungen 80, 81, die von den Rundungen 90, 85 gebildet sind, näher am benachbarten Umfang der drehbaren Steuerplatte 74, als diejenigen Abschnitte der Ausbuchtungen 80, 81, die von den Rundungen 87, 86 gebildet sind, bezüglich des deren benachbarten Plattenumfangs. Ein Schnittpunkt 82 des Durchmessers 77 mit der bezüglich des Scheibendurchmessers 76 nach links versetzten Wand der Aushöhlung 75 bildet den Mittelpunkt von zwei Konstruktionsbögen 84 und 83, jeder ungefähr einem Winkelabschnitt von etwa 30° entsprechend. Diese Kreisbögen entstammen einem Kreis mit einem Radius von angenähert 8,9 mm und bestimmen die Form der Ausbuchtungen 80, 81. Die Enden dieser Kreisbögen 83, 84 gehen in kleine Rundungen 85, 86, 87 und 90 über, so dass die Bögen 83, 84 einen sattelähnlichen Übergang 91 zwischen den Ausbuchtungen 81 und 80 bilden. Der Übergang 91 wird von den beiden Konstruktionsbögen 92 und 93 gebildet, welche Kreisbögen um den Mittelpunkt 94 und 95 mit den Radien 9,14 mm bzw. 5,51 mm entsprechen.

Bei der dargestellten Ausführungsform der betrachteten Erfindung ist eine ziemlich weite und flache Abkantung der oben beschriebenen Konstruktions-Kreisbögen eingeschlossen. Die Abkantung 96 verläuft geneigt unter einem Winkel von ungefähr 45° bezüglich der Senkrechten zur Oberfläche der Steuerplatte 74 bis zu einer Tiefe von ungefähr 1,016 mm unter die Oberfläche der Steuerplatte 74. Diese Abkantung 96 verhindert eine Kavitationsbildung und beseitigt ein ansonsten störendes Geräusch des Wasserhahns. Weiterhin kann es in dieser Hinsicht zweckmässig sein, einen (in der Zeichnung nicht dargestellten) kleinen Siebkäfig aus rostfreiem Stahl innerhalb der Aushöhlung 75 vorzusehen.

Die Fig. 8 zeigt die relative Anordnung der stationären Sitzplatte 6 gegenüber bzw. vis-à-vis der drehbaren Steuerplatte 74 in der Verschlussstellung. Das heisst, die Aushöhlung 75 in der Steuerplatte 74 befindet sich gegenüber und benachbart der Aushöhlung 73 in der Sitzplatte 66. Die Ausbuchtung 80 in der Aushöhlung 75 befindet sich zumeist in passender Ausrichtung mit der Auslassöffnung 71 in der Aushöhlung 73. In gleicher Weise befindet sich die Ausbuchtung 81 in im wesentlichen passender Ausrichtung mit der Auslassöffnung 70.

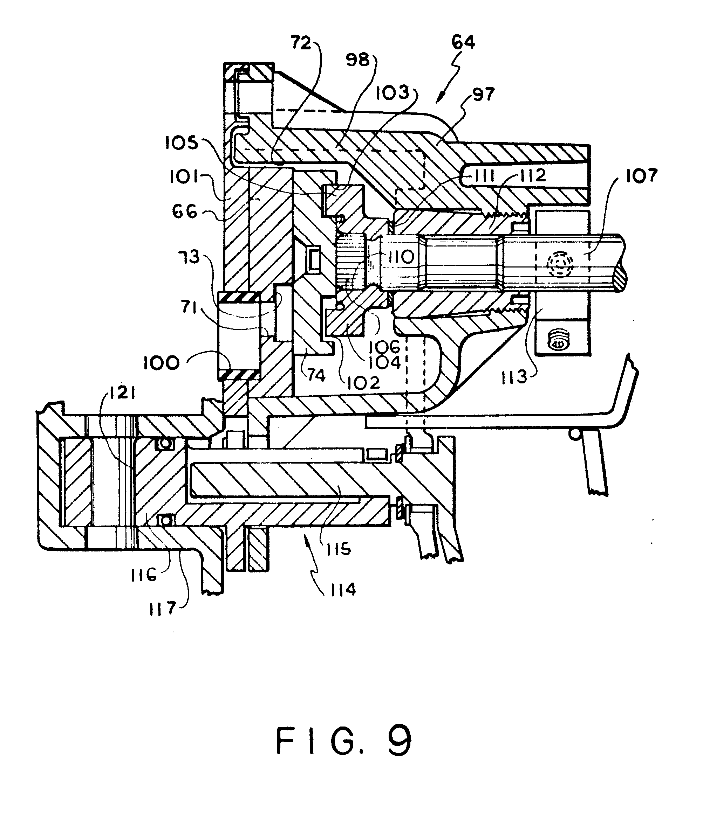

Die zusammengebaute Mischventilkapsel 64 lässt sich am besten der Fig. 9 entnehmen. Wie dargestellt, wird die stationäre Sitzplatte 66 vom Gehäuse 97 der Ventilkapsel gehalten.

Eine Drehbewegung der Sitzplatte 66 wird von den Stegen 98 (von denen lediglich einer dargestellt ist) im Inneren des Gehäuses 97 unterbunden, welche in die Nuten 72 am Umfang der Sitzplatte eingreifen. Die Sitzplatte 66 ist an der flachen Halteplatte 101 abgestützt, welche den Zufluss von Heiss- und Kaltwasser in das Kapselgehäuse 64 erlaubt, sowie das Ausströmen des gemischten Wassers entweder in den Wasserhahn an der Badewanne oder in den Duschkopf, wie das nachfolgend beschrieben wird. Das Mischwasser strömt aus der Aushöhlung 73 durch die Auslassöffnungen 71, 70 (von denen in Fig. 9 lediglich die Öffnung 71 dargestellt ist) zu dem Wasserhahn. Weiterhin strömt dieses Wasser durch zwei hohlzylindrische Dichtungen 100 (von denen in Fig. 9 lediglich eine Dichtung dargestellt ist) aus biegsamem Material, welche Dichtungen 100 in die Halteplatte 101 eingesetzt sind, welche Halteplatte wiederum am Kapselgehäuse 97 befestigt ist. Die Dichtung 100 aus biegsamem Material bildet eine Dichtung aus einer Gruppe von vier Dichtungen, von denen jede in eine Vertiefung in der Sitzplatte 66 eingesetzt ist, welche Vertiefungen in die Öffnungen 65, 67, 70 und 71 übergehen.

Gemäss einer Besonderheit dieser Erfindung stützen sich diese vier nachgiebigen Dichtungen (von denen in Fig. 9 lediglich die Dichtung 100 dargestellt ist) an der stationären Sitzplatte 66 ab, so dass eine gleichmässig verteilte Druckkraft vorliegt, welche die stationäre Sitzplatte 66 gegen die drehbare Steuerplatte 74 drückt. Diese gleichmässige Verteilung der die Sitzplatte 66 gegen die drehbare Steuerplatte 74 drückenden Kraft erhöht die Wasserdichtheit der Öffnungen, der Durchgänge und der Aushöhlungen, wobei gleichzeitig eine Leckage in die Ventilkapsel 64 unterbunden ist. Die nachfolgende Berechnung erläutert die gesamte «Zusammenhaltekraft» gemäss diesem Gesichtspunkt der Erfindung:

Die Kraft ($F_T$) wirkt als die von einem freien Körper ausgehende Kraft, während die Kraft $F_{T_1}$ diejenige Kraft darstellt, welche die keramische Sitzplatte und die Steuerplatte gegen die Steuerführung drückt. Dann ergibt sich

$$F_{T_1} = p \times A_{Dichtungen}$$

wobei
p = Wasserdruck;
$A_{Dichtungen}$ = Dichtfläche;

geht man von einem Wasserdruck p = 70N/cm² aus, sowie einem Durchmesser der Dichtungen von 12,7 mm, dann resultiert:

$$F_{pA} = p \times A_{der\ benetzten\ Oberflächen}$$
$$= 70\ N \times cm^2 \left[\left(\frac{2.22}{16} \times 2\right) + \left[\left(\frac{1.0}{16} + \frac{1.29}{16}\right) - 2\left(.200^2 \times \frac{\pi}{4}\right] - \left(\frac{.400}{16} \times 2\right)\right]$$
$$= 70\ N/cm^2 \times 1,98\ cm^2\ (bzw.\ 0,308\ in^2)$$
$$= 139,7\ N\ (30.8\ lbs.).$$

Darüber hinaus gilt
$F_H = F_T - F_{pA}$, wobei $F_H$ die gesamte «Zusammenhaltekraft» darstellt;
$F_H = 464 - 139\ N = 325\ N$ (bzw. 71,7 lbs.). Zusammenhaltekraft, welche 109 N Kraft aus den zusammengerückten Dichtung wie die resultierende hydraulische Kraft aus (355 N - 139 N) oder 216 N (47,7 lbs.) beträgt.

Die Berührungsfläche zwischen den keramischen Bauteilen ist

$$5,58 - [1,98 + 0,20] + 0,40 = 3,80\ cm^2\ (0,59\ in.^2);$$

was einen Druck zwischen den keramischen Bauteilen vom 325 N/3,80 cm² = 85 N/cm² (bzw. 122.0 psi) ergibt,
welche Kraft die stationäre Sitzplatte 66 gegen die drehbare Steuerplatte 74 drückt und damit eine Wasserleckage an dieser Grenzfläche verhindert.

Aus Fig. 9 ist ersichtlich, dass die drehbare Steuerplatte 74 zwei entgegengesetzt ausgerichtete Verzahnungen 102, 103 aufweist, welche passende Vorsprünge 104, 105 eines gezackten Antriebsgliedes 106 aufnehmen. Die Bewegung des Antriebsgliedes 106 und damit auch der rotierbaren Steuerplatte 74 wird von einer Welle oder einem Ventilstössel 107 gesteuert. Das Ende des Ventilstössels 107, das im Antriebsglied 106 sitzt, besitzt ein gezacktes Ende und liegt damit an einer entsprechenden Verzahnung in der Bohrung 110 an, welche dieses Ende aufnimmt, um zu gewährleisten, dass der Ventilstössel 107 und das Antriebsglied 106 sich als eine Einheit drehen. Eine Beilagscheibe 111 am Ventilstössel 107 ist zwischen dem Antriebsglied 106 und der Gewin-

$$F_{T_1} = [70 \times 4\ (1,27^2 \times \pi/4)]$$
$$= 355\ N;$$

darüber hinaus drücken die vier Dichtungen mit einer Kraft von etwa 27 N, wenn jede Dichtung um etwa 0,76 mm zusammengedrückt wird; daraus resultiert:

$$F_T = 355\ N + 109\ N =$$
$$F_T = 464\ N.$$

Betrachtet man den Ventilsitz als einen freien Körper, dann gilt

$$F_T = F_{pA} + F_H$$

wobei $F_{pA}$ die hydraulische Druckkraft darstellt, die auf alle benetzten Oberflächen am Ventilsitz, an der Seite benachbart zur drehbaren Steuerplatte einwirkt und die Keramikteile fortdrücken will.

dehülse 112 eingelegt, welche ins Innere des Ventilkapselgehäuses 97 führt.

Nach einem anderen Gesichtspunkt der Erfindung ist ein lösbarer Anschlag 113 mittels einer Stellschraube oder dergleichen am Ventilstössel 107 befestigt. Der Anschlag 113 liegt am (nicht dargestellten) Abschnitt des Ventilkapselgehäuses 97 an, um den Drehwinkel des Ventilstössels 107 zu begrenzen (und damit auch das Ausmass der Drehung der Steuerplatte 74) relativ zur Sitzplatte 66. Auf diese Weise ist das Ausmass der Winkelbewegung, welche die drehbare Steuerplatte 74 ausführen kann, auf einen solchen Betrag begrenzt, welcher dem vollen Temperaturbereich des abgegebenen Wassers entspricht, nämlich von anfänglich völlig kaltem Wasser bis zu schliesslich völlig heissem Wasser.

Wie bereits ausgeführt sind die Abschnitte der Heisswassereinlass-Anschlussstücke 11 und der Kaltwasser-Anschlussstücke 12 (vgl. Fig. 1 und 2) bezüglich der Heisswasser- und Kaltwasser-Zuführleitung (welche in den Zeichnungen nicht dargestellt ist) in den Fällen verkehrt angeordnet, wo in einem Gebäude zwei solche Mischventile Rücken-an-Rücken angeordnet werden sollen. Sofern diese verkehrte Anordnung vorliegt, befindet sich das Heisswassereinlass-Anschlussstück 11 benachbart zur (nicht dargestellten) Kaltwasserzuleitung, und das Kaltwassereinlass-Anschlussstück 12 benachbart zur (ebenfalls nicht dargestellten) Heisswasserzuleitung. In diesem Falle würde die Installierung von Querverbindungen am Rohrverteiler 10, beispielsweise zur Verbindung des Heisswassereinlass-Anschlussstückes 11 mit der Heisswasserzuleitung, die sich nunmehr benachbart zum Kaltwassereinlass-Anschlussstück 12 befindet, eine teuere und zeitraubende Aufgabe darstellen.

Konsequenterweise wird dieses Problem durch Anwendung einer weiteren Besonderheit der Erfindung gelöst. Zur entsprechenden Erläuterung kann der lösbare Anschlag 113 (vgl. Fig. 9) am Ventilstössel 107 gelöst werden, um eine freie Drehung des Ventilstössels 107 bezüglich des Anschlages 113 zuzulassen. Um nunmehr einen Anschluss des Heisswassereinlass-Anschlussstückes 11 (vgl. Fig. 1 und 2) an die Kaltwasserzuleitung und entsprechend des Kaltwassereinlass-Anschlussstückes 12 an die Heisswasserzuleitung zu ermöglichen, ohne den wichtigen Gesichtspunkt aufzugeben, dass bei einer Drehung des Ventilstössels 107 (vgl. Fig. 9) entgegengesetzt zum Uhrzeigersinn, zuerst das Kaltwasser fliesst, werden die Ventilstössel 107 und die daran befestigte drehbare Steuerplatte 74 bezüglich der in den Fig. 8 und 9 gezeigten Stellung der drehbaren Steuerplatte 74 um 180° gedreht. Daraufhin wird der lösbare Anschlag 113 erneut am Ventilstössel 107 angezogen, um die Winkelbewegung des Ventilstössels 107 bezüglich des Wassertemperaturbereiches von völlig kalt bis völlig heiss zu begrenzen. Diese um 180° umgekehrte Anordnung der drehbaren Steuerplatte 74 hat die Wirkung, dass nunmehr aus dem Mischventil zuerst Kaltwasser fliesst, unbeschadet der Tatsache, dass nunmehr das Heisswassereinlass-Anschlussstück 11 (vgl. Fig. 1 und 2) direkt an die Kaltwasserleitung, und das Kaltwassereinlass-Anschlussstück 12 nunmehr direkt an die Heisswasserzuleitung angeschlossen ist.

Betrachtet man wiederum Fig. 1, so weist eine Mischwasser-Volumensteuerung 114 einen Ventilstössel 115 und einen Ventilabschnitt 116 auf, der an jenem Ende des Ventilstössels 115 angebracht ist, der drehbar in einem Ventilgehäuse 117 gelagert ist. Wie dargestellt, ist das Ventilgehäuse 117 als einstückiger Bestandteil des Rohrverteilers 10 ausgebildet. Das Ventilgehäuse 117 (vgl. Fig. 9) ist darüber hinaus unmittelbar unterhalb der Mischventilkapsel 64 angeordnet, und steht (wie das schematisch in Fig. 2 angedeutet ist,) durch die Mischwasser-Auslassleitung 120 in Strömungsverbindung mit der Kapsel 64.

Eine Bohrung 121 verläuft diametral innerhalb des Ventilgliedes 116. Die Bohrung 121 steuert damit das Volumen des Mischwassers, das durch die Volumensteuerung 114 fliesst, in dem das Ventilglied 116 relativ zum Ventilgehäuse 117 gedreht werden kann, so dass die Mischwasserströmung in der Leitung 120 entweder völlig unterbrochen ist, oder Teile oder die gesamte lichte Weite der Bohrung 121 für die Strömung des Mischwassers zur Verfügung stehen. Die auf diese Weise beschränkte Wassermenge wird im Anschluss an die Volumensteuerung 114 über die Leitung 122 dem Wasserhahn an der Badewanne oder dem Sprühkopf der Düse zugeführt.

Zur Benutzung des Mischventils wird ein Ventilhangriff 123 (vgl. Fig. 1) an der Mischventilkapsel 64 entgegengesetzt dem Uhrzeigersinn gedreht, wie das durch den Pfeil 124 angedeutet ist. Wie das nachfolgend noch im einzelnen beschrieben wird, lässt dieser Vorgang zuerst das Kaltwasser durch die Mischkapsel 64 fliessen. Der anfängliche Kaltwasserstrom durch die Kapsel 64 verringert wirksam den Kaltwasserdruck in dem Strömungspfad, zu welchem der Kaltwasserauslass 62 (vgl. Fig. 2), die Bohrung 60 und die Leitung 41 gehören. Der geringe Druck in der Leitung 41 relativ zu dem höheren Kaltwasserdruck im Einlassanschlussstück 12 führt dazu, dass sich das Ventilglied 36 im Kaltwasser-Absperrventil 17 vom Ventilsitz löst, und dadurch eine direkte Strömungsverbindung durch die Mischventilkapsel 64 zu der Auslassleitung 120 für das Mischwasser zustande kommt.

Der Zweck der federbelasteten Absperrventile 14, 17 ist ein zweifacher. Zum einen können diese Ventile 14 und 17 mittels einem Schraubenzieher geschlossen werden, der in den Schlitz 25 am Ventil 14 bzw. in den entsprechenden Schlitz am Ventil 17 eingeführt wird, um dadurch den Wasserstrom durch die Ventile zu unterbrechen, sofern eine Reparatur an der Mischventilkapsel erforderlich ist. Darüber hinaus dienen diese federbelasteten Ventile 14, 17 auch als Rückschlagventile, welche die Strömung lediglich in einer Richtung zulassen. Deshalb kann der entsprechende Wasserstrom niemals in die zum Wasserhahn führenden Zuführleitungen eintreten. Ansonsten könnte eine über-Kreuz-Strömung aus einer Versorgungsleitung in die andere auftreten (sofern die Absperrventile nicht vorgesehen wären), wenn das Mischventil abgeschlossen ist und der Druck in den zum Wasserhahn führenden Heisswasser- und Kaltwasserleitungen nicht ausgeglichen ist. Unter den oben genannten Bedingungen kann eine langsame über-Kreuz-Strömung zwischen dem Steuerkolben 44 und der Bohrung der Kammer 43 auftreten.

Den Schutz gegen einen plötzlichen Anstieg der Heisswasser- oder Kaltwasserzufuhr oder vor Druckverlusten liefert das Druckausgleichsventil. Wie in Fig. 2 dargestellt, befindet sich der druckausgleichende Steuerkolben 44 mittig innerhalb des Druckausgleichsventil-Gehäuses 16 unter den Normalbedingungen, wo der Druck im Heisswasser- und Kaltwassereinlass im wesentlichen ausgeglichen ist.

Demgegenüber wird nachstehend mit Bezugnahme auf Fig. 3 der Zustand des Druckausgleichventils erläutert, der bei einem plötzlichen Anstieg des Kaltwasserdruckes oder einer Abnahme des Heisswasserdruckes in den (nicht dargestellten) Hauptversorgungsleitungen auftritt. Nimmt man für diesen Zweck an, dass der Kaltwasserdruck am Kaltwassereinlass 42 für eine Zeitspanne im wesentlichen konstant bleibt, in welcher der Heisswasserdruck im Heisswassereinlass 40 radikal abnimmt. Der Heisswasserdruck in der Bohrung 54, der Bohrung 56 und der Aushöhlung 57 ist relativ geringer als der Kaltwasserdruck in den entsprechenden Bohrungen 60, 61 und der Aushöhlung 63. Der grössere hydraulische Druck in der Kaltwasseraushöhlung 63 ge-

genüber bzw. vis-à-vis dem niedrigeren Druck in der Heisswasseraushöhlung 57 zwingt den Druckausgleichs-Steuerkolben 44 zu einer Verschiebung in Richtung des Pfeiles 125 auf die Aushöhlung mit niedrigem Druck zu. Diese Verschiebung des Druckausgleichs-Steuerkolbens 44 auf die Heisswasseraushöhlung 57 mit niedrigem Druck zu, bringt die vorstehende Fläche 50 in eine teilweise versperrende Stellung bezüglich des Kaltwassereinlasses 42 für das Ventilgehäuse 16. In der Zwischenzeit hat am Heisswassereinlass 40 jegliche Durchflussbeschränkung völlig aufgehört, da die hervorstehende Fläche 47 vom Heisswassereinlass 40 weg verschoben ist, und die dünne, mittig angeordnete hervorstehende Fläche 51 mit der dazugehörigen breiten Nut 45 den Heisswassereinlass 40 nicht versperrt. Auf diese Weise wird der Heisswasser- und Kaltwasserdruck ausgeglichen, um auch dann einen gleichen Heisswasser- und Kaltwasser-Auslassdruck zu gewährleisten, sofern eine merkliche Abnahme des Heisswasserdruckes oder ein deutlicher Anstieg des Kaltwasserdruckes auftritt.

An Hand der Fig. 4 soll die Wirkung des Druckausgleichsventils für jenen Fall erläutert werden, wo der Kaltwasserdruck völlig ausfällt. In diesem Falle zwingt der Druck in der Heisswasserleitung in der Aushöhlung 57 und die Druckabnahme in der Kaltwasseraushöhlung 63 den Druckausgleichs-Steuerkolben 44 zu einer Verschiebung in Richtung des Pfeiles 126 auf die Aushöhlung 63 zu.

In diesem Zustand versperrt die vorstehende Fläche 47 im wesentlichen die Heisswasserströmung vom Heisswassereinlass 40 durch das Druckausgleichsventil. Im Gegensatz dazu ist der Kaltwassereinlass 42 ohne jegliche Beschränkung; jedoch tritt wegen des Druckverlustes des in den Kaltwassereinlass 42 eintretenden Kaltwassers keine Kaltwasserströmung auf. In diesem Falle würde das entweder am Wasserhahn der Badewanne oder am Duschkopf austretende Wasser lediglich aus Heisswasser bestehen; diese Strömung ist jedoch auf einige wenige Tropfen vermindert, da der Druckausgleichs-Steuerkolben 44 den Heisswassereinlass 40 im wesentlichen versperrt hat.

Nachfolgend wird wieder auf Fig. 2 Bezug genommen. Nachdem die Wasserströme das Druckausgleichsventil passiert haben, treten der Heisswasserstrom in der Auslassleitung 55 und der Kaltwasserstrom in der Auslassleitung 62 in die Mischventilkapsel 64 ein. Wie das vielleicht am besten der Fig. 5 zu entnehmen ist, fliesst das Heisswasser durch die Öffnung 65 in der stationären Sitzplatte 66. In gleicher Weise fliesst das Kaltwasser durch die Öffnung 67. In Abhängigkeit von der relativen Orientierung der Aushöhlung 75 der drehbaren Steuerplatte 74 bezüglich der Öffnungen 65, 67 (vgl. Fig. 8) fliesst kein Wasser, oder lediglich Kaltwasser, oder lediglich Heisswasser, oder lediglich einige gewünschte Anteile Mischwasser aus Kalt- und Heisswasser aus der Aushöhlung 75 und der gegenüberliegenden Aushöhlung 73 in der Sitzplatte 66 durch die Auslassöffnungen 70 und 71.

In dieser Hinsicht ist zu beachten, dass die Ausbuchtungen 80, 81 (vgl. Fig. 7) der Aushöhlung 75 bezüglich der Rundungen 87 bzw. 85 asymmetrisch ausgebildet sind. Aufgrund dieser Umstände wird, wenn die drehbare Steuerplatte 74 in Richtung des Pfeiles 127 gedreht wird (wie das der Fig. 8 zu entnehmen ist), eine Strömungsverbindung durch die stationäre Sitzplatte 66 zuerst zwischen der Rundung 90 der Ausbuchtung 80 und der Kaltwasseröffnung 67 bewerkstelligt.

Sofern die Anordnung der zum Mischventil führenden Haupt-Wasserversorgungsleitungen verkehrt ist, und deshalb das Heisswasser der Öffnung 67 zugeführt wird, besteht die Notwendigkeit, dass auch dieses Anschlussstück zuerst Kaltwasser liefert, wenn der drehbare Handgriff 74 in Richtung des Pfeiles 127 gedreht wird. In diesem Falle soll entsprechend einer wesentlichen Besonderheit der Erfindung, die drehbare Steuerplatte 74 (vgl. Fig. 8 und 9) relativ zu dem lösbaren Anschlag 113 (vgl. Fig. 9) und dem Ventilsitz um 180° gedreht werden. Als Folge der Umkehrung der drehbaren Steuerplatte 74 wird eine Strömungsverbindung zuerst zwischen der Rundung 90 der Ausbuchtung 80 und der neuen Kaltwasseröffnung 65 in der Sitzplatte 66 bewerkstelligt, wenn der Handgriff in Richtung des Pfeiles 127 gedreht wird.

Wenn die drehbare Steuerplatte 74 fortlaufend in Richtung des Pfeiles 127 gedreht wird, dann beginnt die Ausbuchtung 81 eine Strömungsverbindung mit der neuen Heisswasseröffnung 67 herzustellen, und wenn die drehbare Steuerplatte 74 noch weiter gedreht wird, dann vermischt sich das Heisswasser mit dem bereits strömenden Kaltwasser in den Aushöhlungen 73 und 75.

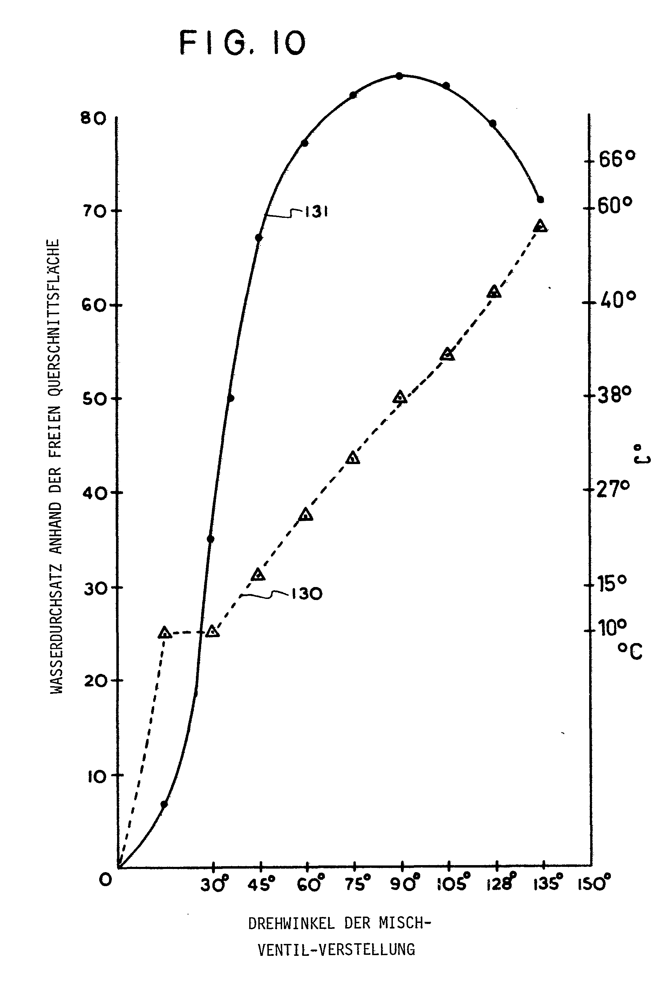

Das ausgewählte Volumen der Ausbuchtungen 80 und 81 sorgt für eine im wesentlichen lineare Beziehung zwischen der Drehung des Ventilhandgriffs 123 (vgl. Fig. 1) und der Änderung der Wasserauslasstemperatur. In dieser Hinsicht wird auf Fig. 10 verwiesen, welche an Hand der graphischen Darstellung mit der Kurve 130 Versuchsergebnisse wiedergibt, welche die lineare Beziehung zwischen der Handgriffdrehung und der Mischwassertemperatur bestätigen. Ferner ist in Fig. 10 mit der Kurve 131 die Gesamtströmung als Funktion der Ventilhandgriffdrehung dargestellt. Diese Kurve bestätigt den fast konstanten Strömungsmitteldurchsatz, der von diesem Mischventil in einem breiten Bereich von Mischwassertemperaturen gewährleistet ist.

Die nachfolgende Tabelle gibt für verschiedene Drehwinkel des Mischventilhandgriffes 123 (vgl. Fig. 1) die Querschnittsflächen für den Heisswasser- und Kaltwasserstrom wieder, welche bei den betrachteten, relativen winkelmässigen Ausrichtungen der Sitzplatte 66 (vgl. Fig. 8) und der drehbaren Steuerplatte 74 auftreten; ferner ist die dazugehörige Wasserauslasstemperatur angegeben:

| Drehwinkel des Mischventil-Handgriffs | Kaltwasser-strom – Querschnitts-fläche (cm³) | Heisswasser-strom – Querschnitts-fläche (cm³) | Gesamtstrom Querschnitts-fläche (cm³) | Mischwassertemperatur bei einer angenommenen Kaltwassertemperatur von etwa 10°C u. einer Heisswasser-temperatur von etwa 66°C. |
|---|---|---|---|---|
| 15° | 0,45 | 0 | 0,45 | 10 |
| 30° | 2,25 | 0 | 2,25 | 10 |
| 45° | 3,80 | 0,52 | 4,32 | 17 |
| 60° | 3,74 | 1,22 | 4,97 | 24 |
| 75° | 3,35 | 1,93 | 5,29 | 30 |
| 90° | 2,71 | 2,71 | 5,42 | 38 |
| 105° | 2,19 | 3,16 | 5,35 | 43 |
| 120° | 1,42 | 3,68 | 5,09 | 50 |
| 135° | 0,64 | 3,93 | 4,58 | 57 |

Bei Austritt aus der Mischventilkapsel 64 (vgl. Fig. 2) fliessen die Wasserströme durch die Mischwasserauslassleitung 120 in einem solchen Volumen, das durch den lichten Querschnitt der Bohrung 121 in der Mischwasser-Volumensteuerung 114 festgelegt wird. Nachdem das Mischwasser durch die Bohrung 121 hindurchgetreten ist, fliesst das Wasser durch eine Leitung 122 zu einem (nicht dargestellten) Wasserhahn in der Badewanne oder zum Sprühkopf einer (ebenfalls nicht dargestellten) Dusche.

Wie dargelegt, wird mit der vorliegenden Erfindung ein relativ preiswertes Mischventil bereitgestellt, das zuverlässig, im wesentlichen lecksicher und korrosionsfest ist, und das durch eine einfache Verschwenkung für die Installation Rücken-an-Rücken geeignet ist, ohne dass die wichtige Besonderheit, dass bei einer Drehung des Handgriffs zuerst Kaltwasser fliesst, verloren gegangen ist.

**Patentansprüche**

1. Mischventil mit einer Sitzplatte (66), in der eine Öffnung (65) für ein heisses Strömungsmittel, eine Öffnung (67) für ein kaltes Strömungsmittel und eine Auslassöffnung ausgespart sind, mit einer bezüglich der Sitzplatte (66) drehbaren Steuerplatte (74), die mit einer Oberfläche an der Sitzplatte (66) anliegt, welche Steuerplatte (74) eine an die anliegende Oberfläche angrenzende Aushöhlung (75) aufweist, mit zwei bezüglich einer Symmetrieachse (77) symmetrisch angeordneten Ausbuchtungen (80, 81), dadurch gekennzeichnet, dass die zwei Ausbuchtungen (80, 81) nierenförmig ausgebildet sind und bezüglich der zur Symmetrieachse (77) im Plattenmittelpunkt (76) senkrechten Achse (79) asymmetrisch angeordnet sind, so dass sich auf der einen Seite dieser senkrechten Achse (79) ein deutlich grösserer Abschnitt der nierenförmigen Ausbuchtungen (80, 81) befindet als auf der anderen Seite, wobei beide grösseren Abschnitte in der gleichen Richtung bezüglich des Plattenmittelpunktes (76) in Richtung auf den Plattenumfang hin versetzt angeordnet sind, und jede nierenförmige Ausbuchtung (80, 81) an ihren beiden Enden über glatte Abrundungen (87, 90 bzw. 85, 86) in je einen sattelförmigen, also entgegengesetzt gekrümmten Mittelteil (92, 93) übergeht, welche beiden Mittelteile (92, 93) die beiden nierenförmigen Ausbuchtungen (80, 81) miteinander verbinden, so dass bei einer Drehung der Steuerplatte (74) zuerst einer der in Richtung des Plattenumfangs versetzten grösseren Abschnitte einer nierenförmigen Ausbuchtung (80 oder 81) eine der in der Sitzplatte (66) ausgebildeten Strömungsmittel-Zuführungsöffnungen (65, 67) überdeckt, um zwischen dieser und der Auslassöffnung eine durchgängige Strömungsverbindung zu schaffen.

2. Mischventil nach Anspruch 1, dadurch gekennzeichnet, dass der Rand der Aushöhlung (75) eine Abkantung aufweist, welche Abkantung die Kavitationsbildung innerhalb dieser Aushöhlung weitgehend beseitigt.

3. Mischventil nach Anspruch 1 oder 2, dadurch gekennzeichnet, dass in der Sitzplatte (66) angrenzend an die anliegende Oberfläche eine Aushöhlung (73) ausgebildet ist, deren Abmessungen an eine Drehung der Steuerplatte (74), relativ zu der stationären Sitzplatte (66) angepasst sind; und die Sitzplattenaushöhlung (73) in Strömungsverbindung mit der Auslassöffnung steht.

4. Mischventil nach einem der Ansprüche 1 bis 3, dadurch gekennzeichnet, dass im Umfang der Sitzplatte (66) der gezielten Ausrichtung der Sitzplatte dienende Nuten (72) ausgespart sind.

5. Mischventil nach einem der Ansprüche 1 bis 4, dadurch gekennzeichnet, dass
– in der Sitzplatte (66) zwei Auslassöffnungen (70, 71) ausgebildet sind;
– diese Auslassöffnungen in Strömungsverbindung mit den gegenüberliegenden Enden der Sitzplattenaushöhlung (73) stehen;
– die Heisswasserauslassöffnung (65) und die Kaltwasserauslassöffnung (67) im gleichen Abstand auf gegenüberliegenden Seiten der Sitzplattenaushöhlung (73) angeordnet sind;

– alle diese Öffnungen (65, 67, 70, 71) in Vertiefungen enden, die in der zur Steuerplatte (74) entfernten Seite der Sitzplatte (66) ausgespart sind;

– diese Öffnungen (65, 67, 70, 71) vom jeweiligen Vertiefungsmittelpunkt in Richtung auf den Sitzplattenmittelpunkt zu versetzt angeordnet sind; und in jede dieser Vertiefungen je eine zylindrische Dichtung aus biegsamem Material eingesetzt ist, so dass eine ausgeglichene Druckkraft resultiert, welche die Sitzplatte (66) im anliegenden, im wesentlichen wasserdichten Kontakt mit der Steuerplatte (74) hält.

6. Mischventil nach einem der Ansprüche 1 bis 5, dadurch gekennzeichnet, dass

– zusätzlich ein Rohrverteiler (10) vorhanden ist, der eine Strömungsverbindung zu einem Kaltwassereinlass-Anschlussstück (12) und zu einem Heisswassereinlass-Anschlussstück (11) aufweist, sowie mit einem Druckausgleichsventil (16) in Verbindung steht, um das Volumen des durch den Rohrverteiler (10) strömenden Kalt- und Heisswassers entsprechend einzustellen;

– eine Heisswasserauslassleitung (55) das Druckausgleichsventil (16) mit der Heisswasseröffnung (65) in der Sitzplatte (66) verbindet; und

– eine Kaltwasserauslassleitung (62) das Druckausgleichsventil (16) mit der Kaltwasseröffnung (67) in der Sitzplatte (66) verbindet.

7. Mischventil nach Anspruch 6, dadurch gekennzeichnet, dass

– das Druckausgleichsventil (16) ein Gehäuse mit einem Heisswassereinlass, einem Kaltwassereinlass und einer Ventilkammer in Strömungsverbindung mit dem Heisswasser- bzw. Kaltwassereinlass am Druckausgleichsventil aufweist;

– innerhalb des Druckausgleichsventil-Gehäuses (16) ein Druckausgleich-Steuerkolben (44) verschiebbar angeordnet ist;

– dieser Steuerkolben (44) in seinen Oberflächen zwei Nuten (45, 46) aufweist, welche beträchtlich breiter sind, als die Weite der Gehäuseeinlässe; eine vorstehende Fläche (51) diese beiden Nuten voneinander trennt, welche hervorstehende Fläche beträchtlich schmäler ist, als der trennende Abschnitt zwischen den Gehäuseeinlässen;

– ferner zwei hervorstehende Flächen (47, 50) an den gegenüberliegenden Enden des Steuerkolbens (44) ausgebildet sind; und

– jede dieser hervorstehenden Flächen (47, 50) mindestens die Breite des jeweiligen Gehäuseeinlasses aufweist;

– der Steuerkolben (44) ferner zwei durchgehende Bohrungen (54, 60) aufweist, welche das Heiss- bzw. Kaltwasser durch den Steuerkolben (44) hindurchtreten lassen; und von diesen Bohrungen (54, 60) je eine Bohrung (56 bzw. 61) abzweigt, welche eine Strömungsverbindung zwischen der Heisswasserbohrung (54) bzw. der Kaltwasserbohrung (60) und der jeweiligen Ventilkammer am Ende des Steuerkolbens (44) herstellt.

8. Mischventil nach einem der Ansprüche 1 bis 7, gekennzeichnet durch ein Heisswasser-Absperrventil (14), das ausgewählt den vom Heisswassereinlass-Anschlussstück (11) herkommenden Heisswasserstrom unterbrechen kann; und ein Kaltwasser-Absperrventil (17), das ausgewählt den vom Kaltwassereinlass-Anschlussstück (12) herkommenden Kaltwasserstrom unterbrechen kann, um bei Bedarf ein Vermischen von Kalt- mit Heisswasser zu verhindern.

9. Mischventil nach einem der Ansprüche 1 bis 8, dadurch gekennzeichnet, dass zusätzlich ein Mischwasser-Volumensteuerventil (114) vorhanden ist, das in die von der Auslassöffnung in der Sitzplatte (66) wegführende Auslassleitung (120) eingesetzt ist, um diejenige Mischwassermenge zu steuern, die über die Auslassleitung (122) dem Wasserspender zugeführt wird.

## Claims

1. Mixing valve with a seat plate (66) in which there are hollowed-out an aperture (65) for a hot flow medium, an aperture (67) for a cold flow medium, and outlet apperture, with a control plate (74) that is rotatable with respect to the seat plate (66), which control plate (74) abuts the seat plate (66) with one surface, and has a recess (75) bounding the abutting surface, with two outward bulges (80, 81) that are symmetrically arranged with respect to an axis of symmetry (77), characterised in that the two bulges (80, 81) are made to be kidney-shaped and are arranged asymmetrically with respect to the axis (79) vertical to the axis of symmetry (77) in the plate centre (76), so that on one side of this vertical axis (79) there is a clearly larger section of the kidney-shaped bulges (80, 81) than on the other side, whereby both larger sections in the same direction are arranged to be offset with respect to the plate centre (76) in the direction of the plate circumference, and each kidney-shaped bulge (80, 81) changes over at both its ends via smooth roundings (87, 90 or 85, 86) to a saddle-shaped, and therefore oppositely curved, centre part (92, 93), which two centre parts (92, 93) are connected together by the two kidney-shaped bulges (80, 81) so that when the control plate (74) is rotated, first of all one of the larger sections of a kidney-shaped bulge (80 or 81) displaced in the direction of the plate circumference covers one of the flow medium supply apertures (65, 67) constructed in the seat plate (66), in order to produce between these and the outlet aperture a through flow connection.

2. Mixing valve according to claim 1, characterised in that the edge of the recess (75) has a bevel which substantially removes the formation of cavitation inside this recess.

3. Mixing valve according to claim 1 or 2, characterised in that there is formed a recess (73) in the seat plate (66) bordering the abutting surface, the dimensions of which recess are adapted to a rotation of the control plate (74) relative to the stationary seat plate (66); and the seat plate recess (73) is in flow connection with the outlet aperture.

4. Mixing valve according to one of claims 1 to 3, characterised in that in the circumference of the seat plate (66) there are hollowed-out notches (72) used for the desired alignment of the seat plate.

5. Mixing valve according to one of claims 1 to 4, characterised in that
  – in the seat plate (66) there are constructed two outlet apertures (70, 71);
  – these outlet apertures are in flow connection with the opposite ends of the seat plate recess (73);
  – the hot water outlet aperture (65) and the cold water outlet aperture (67) are arranged at the same distance on opposite sides of the seat plate recess (73);
  – all these apertures (65, 67, 70, 71) end in depressions which are hollowed-out in the side of the seat plate (66) that is remote from the control plate (74);
  – these apertures (65, 67, 70, 71) are arranged to be offset from the respective depression centre in the direction of the seat plate centre; and
  – there is inserted into each of these depressions a cylindrical seal of flexible material, so that a balanced pressure is produced which holds the seat plate (66) in abutting, substantially water-tight contact with the control plate (74).

6. Mixing valve according to one of claims 1 to 5, characterised in that
  – there is additionally present a manifold (10) which has a flow connection to a cold water inlet connection piece (12) and to a hot water inlet connection piece (11), and is also connected to a pressure balancing valve (16), so as to adjust appropriately the volume of the cold- and hot water flowing through the manifold (10);
  – a hot water outlet pipe (55) connects the pressure balancing valve (16) to the hot water aperture (65) in the seat plate (66); and
  – a cold water outlet pipe (62) connects the pressure balancing valve (16) to the cold water aperture (67) in the seat plate (66).

7. Mixing valve according to claim 6, characterised in that
  – the pressure balancing valve (16) has a housing with a hot water inlet, a cold water inlet and a valve chamber in flow connection with the hot water and cold water inlet on the pressure balancing valve;
  – inside the pressure balancing valve housing (16) there is displaceably arranged a pressure balancing control piston (44);
  – this control piston (44) has in its surfaces two grooves (45, 46) which are considerably wider than the width of the housing inlets;
  – a projecting surface (51) separates these two grooves from one another, which projecting surface is considerably narrower than the separating section between the housing inlets;
  – in addition two projecting surfaces (47, 50) are constructed on the opposite ends of the control piston (44); and
  – each of these projecting surfaces (47, 50) has at least the width of the respective housing inlet;
  – the control piston (44) also has two through bores (54, 60) which allow the hot and cold water to pass through the control piston (44); and from these bores (54, 60) there branches off respectively a bore (56 or 61) which produces a flow connection between the hot water bore (54) or the cold water bore (60) and the respective valve chamber at the end of the control piston (44).

8. Mixing valve according to one of claims 1 to 7, characterised by a hot water shut-off valve (14) which can selectively interrupt the hot water flow coming from the hot water inlet connection piece (11); and a cold water shut-off valve (17) which can selectively interrupt the cold water flow coming from the cold water inlet connection piece (12), so as to prevent a mixing of cold and hot water if so desired.

9. Mixing valve according to one of claims 1 to 8, characterised in that in addition there is a mixed water volume control valve (114) which is inserted into the outlet pipe (120) leading away from the outlet aperture in the seat plate (66), so as to control that amount of mixed water which is delivered via the outlet pipe (122) to the water dispenser.

**Revendications**

1. Robinet mitigeur, comportant une plaque d'appui (66) pourvue d'un orifice de passage (65) pour un fluide chaud, d'un autre orifice de passage (67) pour un fluide froid et d'un orifice de sortie; le robinet comportant, en outre, une plaquette de commande (74), qui peut tourner par rapport à la plaque d'appui (66) et qui a une face appliquée contre la plaque d'appui (66); la plaquette de commande (74) comportant une cavité (75) qui débouche sur sa face appliquée contre la plaque d'appui, et qui présente deux zones renflées à bordures courbes (80, 81) disposées symétriquement par rapport à un axe de symétrie (77); robinet caractérisé en ce que les deux zones renflées à bordures courbes (80, 81) ont un profil réniforme, et sont asymétriques par rapport à un axe (79) perpendiculaire à l'axe de symétrie (77) et passant par le centre (76) de la plaquette de commande; l'agencement étant tel qu'une partie sensiblement plus importante des zones réniformes (80, 81) se trouve située d'un côté de cet axe perpendiculaire (79), par rapport à l'autre côté de ce même axe; les deux parties de plus grande importance étant décalées en direction du bord de la plaquette par rapport au centre (76) de celle-ci; et chaque zone à bordure courbe de profil réniforme (80, 81) étant raccordée à ses deux extrémités à des parties arrondies lisses (87, 90 et 85, 86), aboutissant de chaque côté à deux zones médianes cambrées (92, 93), en regard l'une de l'autre et formant un rétrécissement; ces deux zones médianes (92, 93) reliant entre elles les deux zones renflées à bordures courbes de profil réniforme (80, 81), de telle manière que, si l'on fait tourner la plaquette de commande (74), l'une des parties (80 ou 81) de plus grande importance de l'une des deux zones à bords courbes, de profil réniforme, decalées en direction du bord de la plaquette, vient recouvrir en premier lieu l'un des orifices d'arrivée des fluides (65, 67) ménagés dans la plaque d'appui (66); pour créer un passage afin de permettre l'écoulement d'un fluide entre cet orifice d'arrivée et l'orifice de sortie.

2. Robinet mitigeur selon la revendication 1, caractérisé en ce que le bord de la cavité (75) présente un chanfrein, pour supprimer dans une large mesure la cavitation à l'intérieur de cette cavité.

3. Robinet mitigeur selon l'une des revendications 1 ou 2, caractérisé en ce que la face de la plaque d'appui (66), qui coopère avec la plaquette de commande (74), présente une cavité (73) dont les dimensions sont adaptées à un mouvement de rotation de la plaquette de commande (74) par rapport à la plaque d'appui fixe (66); et en ce que la cavité (73) de la plaque d'appui (66) communique avec l'orifice de sortie.

4. Robinet mitigeur selon l'une des revendications 1 à 3, caractérisé en ce que des échancrures (72) sont ménagées dans le bord de la plaque d'appui (66), pour définir l'orientation de cette plaque en position de montage.

5. Robinet mitigeur selon l'une des revendications 1 à 4, caractérisé en ce que la plaque d'appui (66) comporte deux orifices de sortie (70, 71), qui sont en communication avec les extrémités opposées de la cavité (73) de la plaque fixe (66); l'orifice de sortie d'eau chaude (65) et l'orifice de sortie d'eau froide (67) étant situées à la même distance des extrémités opposées de la cavité (73) de la plaque fixe (66); tous ces orifices (65, 67, 70, 71) débouchant dans des cuvettes ménagées dans la face de la plaque d'appui (66), qui est opposée à la plaquette de commande (74); en ce que ces orifices (65, 67, 70, 71) sont décalés chacun par rapport au centre de la cuvette correspondante, en direction du centre de la plaque d'appui; et en ce qu'une garniture d'étanchéité en matériau élastique est enfoncée dans chacune de ces cuvettes, de manière à assurer sur la plaque d'appui (66) une répartition régulière de la poussée due à la pression de l'eau, afin d'appliquer la plaque d'appui (66) en contact sensiblement étanche contre la plaquette de commande (74).

6. Robinet mitigeur selon l'une des revendications 1 à 5, caractérisé en ce qu'il comporte, en outre, un distributeur d'entrée (10), relié à un raccord d'arrivée d'eau froide (12) et à un raccord d'arrivée d'eau chaude (11), et communiquant également avec une soupape de compensation de pression (16), pour régler correctement le débit de l'eau froide et de l'eau chaude qui passent dans le distributeur (10); en ce qu'on orifice de sortie d'eau chaude (55) est prévu dans le corps de la soupape de compensation de pression (16), pour relier celle-ci à l'orifice de passage de l'eau chaude (65) de la plaque d'appui (66); et en ce qu'un orifice de sortie d'eau froide (62) est prévu dans le corps de la soupape de compensation de pression (16), pour relier celle-ci à l'orifice de passage de l'eau froide (67) de la plaque d'appui (66).

7. Robinet mitigeur selon la revendication 6, caractérisé en ce que le corps de la soupape de compensation de pression (16) comporte un orifice d'entrée d'eau chaude, un orifice d'entrée d'eau froide, et une chambre de régulation qui communique avec chacun des deux orifices précités; en ce qu'un piston de compensation depression (44) est monté à coulisse dans le corps de la soupape de compensation de pression (16); en ce que ce piston de compensation présente sur sa face latérale deux gorges annulaires (45, 46), sensiblement plus larges que les orifices d'entrée du corps; en ce qu'une saillie annulaire (51) sépare les deux gorges précitées, et présente une largeur sensiblement plus faible que celle de la partie du corps située entre les deux orifices d'entrée de celui-ci; en ce que le piston de compensation (44) présente, en outre, deux saillies terminales (47, 50), situées aux extrémités opposées du piston; et chacune de ces saillies terminales ayant au moins la largeur de l'orifice d'entrée correspondant du corps; en ce que le piston de compensation (44) présente deux perçages (54, 60), qui traversent le piston pour permettre respectivement le passage de l'eau chaude et de l'eau froide à travers le piston de compensation (44); et en ce qu'un autre perçage (56, 61), raccordé à chacun des deux perçages précités (54, 60), met respectivement en communication le perçage de passage de l'eau chaude (54) et le perçage de passage de l'eau froide (60), avec la chambre de commande (57, 63) ménagée en regard de chacune des deux extrémités du piston de compensation (44).

8. Robinet mitigeur selon l'une des revendications 1 à 7, caractérisé en ce qu'il comporte une vanne d'arrêt d'eau chaude (14), permettant d'interrompre à la demande le passage de l'eau chaude dans le raccord d'entrée d'eau chaude (11); et une vanne d'arrêt d'eau froide (17), permettant d'interrompre à la demande le passage de l'eau froide dans le raccord d'entrée d'eau froide (12), et d'empêcher au besoin un mélange de l'eau froide et de l'eau chaude.

9. Robinet mitigeur selon l'une des revendications 1 à 8, caractérisé en ce qu'il comporte, en outre, un robinet de débit (114) pour l'eau mitigée, monté sur le conduit de sortie (120) qui part de l'orifice de sortie de la plaque d'appui (66), pour régler le débit d'eau mitigée allant du conduit de sortie (122) à l'organe d'utilisation.

F I G. 1

# F I G. 2

FIG. 3

FIG. 4

FIG. 5

FIG. 6

# F I G. 7

# F I G. 8

FIG. 9

FIG. 10

DREHWINKEL DER MISCH-
VENTIL-VERSTELLUNG